# EUROPÄISCHE PATENTSCHRIFT

(11) **EP 3 477 806 B1**
(45) Veröffentlichungstag und Bekanntmachung des Hinweises auf die Patenterteilung: **02.03.2022**
(21) Anmeldenummer: 17199229.0
(22) Anmeldetag: 30.10.2017
(51) Int. Cl.: H02G 3/30, G09F 3/20

(54) **VERFAHREN ZUM VERBINDEN EINES ERSTEN KABELS MIT EINEM ZWEITEN KABEL, KABELANORDNUNG UND KABELVERBINDUNGSVORRICHTUNG ZUM VERBINDEN EINES ERSTEN KABELS MIT EINEM ZWEITEN KABEL**
METHOD FOR CONNECTING A FIRST CABLE WITH A SECOND CABLE, CABLE ASSEMBLY AND CABLE CONNECTING APPARATUS FOR CONNECTING A FIRST CABLE WITH A SECOND CABLE
PROCÉDÉ DE RACCORDEMENT D'UN PREMIER CÂBLE À UN SECOND CÂBLE, ENSEMBLE DE CÂBLE ET DISPOSITIF DE RACCORDEMENT DE CÂBLES PERMETTANT LE RACCORDEMENT D'UN PREMIER CÂBLE À UN SECOND CÂBLE

(43) Veröffentlichungstag der Anmeldung: 01.05.2019
(73) Patentinhaber: KOMAX HOLDING AG, 6036 Dierikon (CH)
(72) Erfinder: RENGGLI, Urs, 6052 Hergiswil (CH); BUSSMANN, Thomas, 6424 Lauerz (CH); LEHN, René, 6045 Meggen (CH); THEILER, Beat, 6280 Hochdorf (CH); HOSS, Tilman, 8800 Thalwil (CH); JOST, Conradin, 6005 Luzern (CH)
(74) Vertreter: Inventio AG

(56) Entgegenhaltungen:
- EP-A1- 1 744 403
- WO-A1-98/21801
- DE-A1- 10 202 454
- JP-A- 2011 081 279
- JP-A- 2013 127 866
- JP-U- 3 130 546
- JP-U- S52 161 281
- KR-U- 20080 006 208
- US-A1- 2013 341 063

## Beschreibung

Die vorliegende Erfindung betrifft ein Verfahren zum Verbinden eines ersten Kabels mit einem zweiten Kabel, eine Kabelanordnung und eine Kabelverbindungsvorrichtung zum Verbinden eines ersten Kabels mit einem zweiten Kabel.

Kabelketten, d.h. miteinander lösbar verbundene Kabel bzw. Kabelteile, bzw. Verfahren zum Erstellen einer solchen Kabelkette sowie Vorrichtungen zum Erstellen einer solchen Kabelkette sind bekannt. Die Kabelkette umfasst mehrere Kabel bzw. Kabelelemente, bei denen jeweils ein Ende bzw. ein Endbereich eines Kabels mit dem Ende bzw. dem Endbereich des nächsten Kabels usw. kettenförmig verbunden ist. Kabelketten kommen beispielsweise bei dezentralisierten Produktionen zum Einsatz. Hierbei werden vollständige Kabelsätze oder Teile von Kabelsätzen gefertigt, miteinander verkettet und auf einer Trommel aufgewickelt. Die konfektionierten Kabelketten werden z.B. aufgerollt auf einer Trommel an die Montageorte geliefert, wo sie verbaut werden. Die Kabelketten werden normalerweise so erstellt, dass beim Abwickeln der einzelnen Kabel eine logische, dem Verdrahtungsplan entsprechende, Abfolge vorhanden ist. Der Montagemitarbeiter muss sich bei der Verwendung solcher Kabelketten vor Ort zur Installation der Kabel nicht um die Anordnung bzw. Reihenfolge der einzelnen Kabel bemühen, da ihm die Reihenfolge der Kabel durch die Abfolge der Kabel in der Kabelkette (z.B. auf der Trommel) bereits vorgegeben ist.

Die DE 29 721 028 U1 beschreibt beispielsweise eine Kabelkette, die die Kabel bzw. Kabelenden mittels eines Stücks Kunststoffschlauchs miteinander verbindet bzw. verkettet. Auch bekannt sind Verkettungselemente aus Kunststoff, die eine spezifische Aufnahmegeometrie besitzen (siehe z.B. DE 3 220 533 A1 und DE 3 327 583 A1). Bei diesen Kabelketten wird jedoch im Regelfall das Verkettungselement nach Gebrauch wiederverwendet, da ansonsten die Kosten zu hoch sind. Zudem ist das Herstellen der Verbindung zwischen den Kabeln technisch aufwendig, da insbesondere die Ausrichtung des Verkettungselements zu den Kabeln bzw. Kabelenden präzise ausgeführt werden muss. Hierdurch sind die Komplexität und die Kosten der Herstellung der Kabelkette hoch. JP3130546U beschreibt eine Kabelanordnung umfassend einen freien Endbereich eines ersten Kabels, einen ersten Endbereich eines zweiten Kabels, wobei das zweite Kabel parallel zu dem ersten Kabel ausgerichtet ist, und ein Klebeband, mittels dem der freie Endbereich des ersten Kabels zu dem ersten Endbereich des zweiten Kabels mit dem ersten Endbereich des zweiten Kabels lösbar verbunden ist.

Es kann unter anderem ein Bedarf an einem Verfahren zum Verbinden eines ersten Kabels mit einem zweiten Kabel bzw. einer Kabelanordnung bzw. einer Kabelverbindungsvorrichtung zum Verbinden eines ersten Kabels mit einem zweiten Kabel bestehen, bei dem bzw. der zwei Kabel technisch einfach und kostengünstig lösbar miteinander verbunden werden können bzw. sind.

Einem solchen Bedarf kann durch Verfahren zum Verbinden eines ersten Kabels mit einem zweiten Kabel bzw. eine Kabelanordnung bzw. eine Kabelverbindungsvorrichtung zum Verbinden eines ersten Kabels mit einem zweiten Kabel gemäß den unabhängigen Ansprüchen entsprochen werden. Vorteilhafte Ausführungsformen sind in den abhängigen Ansprüchen definiert.

Gemäß einem ersten Aspekt der Erfindung wird ein Verfahren zum Verbinden eines ersten Kabels mit einem zweiten Kabel mit einem Klebeband vorgeschlagen, umfassend folgende Schritte: Anordnen eines freien Endbereichs des ersten Kabels , das insbesondere ein Kabel am Ende einer Kabelkette von mehreren miteinander verbundenen Kabeln ist, parallel und beabstandet zu einem ersten Endbereich des zweiten Kabels; Bereitstellen des Klebebands, wobei das Klebeband zur Bildung von Öffnungslaschen an seinem ersten Klebebandende und seinem zweiten dem ersten Klebebandende gegenüberliegendem Klebebandende in einer Längsrichtung des Klebebands derart gefaltet ist, dass eine haftend beschichtete Seite des Klebebands teilweise mit sich selbst verklebt ist; und Umschließen eines Teils des freien Endbereichs des ersten Kabels und eines Teils des ersten Endbereichs des zweiten Kabels mit dem Klebeband derart, dass der freie Endbereich des ersten Kabels einen größeren Abstand zu dem ersten Klebebandende und dem zweiten Klebebandende als der erste Endbereich des zweiten Kabels aufweist und lösbar mit dem ersten Endbereich des zweiten Kabels verbunden ist.

Ein Vorteil hiervon ist typischerweise, dass die Kabel technisch einfach und kostengünstig lösbar miteinander verbunden werden. Daher kann im Regelfall technisch einfach und kostengünstig eine Kabelkette mit mehreren Kabeln gebildet werden, bei der jeweils ein Kabelende bzw. ein Endbereich eines Kabels mit dem Kabelende bzw. dem Endbereich des nächsten Kabels kettenförmig verbunden ist. Da das Verbindungselement, d.h. das Klebeband, kostengünstig ist, muss das Verbindungselement üblicherweise nicht wiederverwendet werden. Dies senkt typischerweise die Kosten und vereinfacht das Verfahren. Darüber hinaus müssen die Kabel im Normalfall nicht mit einer hohen Präzision zueinander ausgerichtet werden, damit die Endbereiche der Kabel mittels des Klebebands verbunden werden können. Aufgrund der Öffnungslaschen können die Kabel typischerweise technisch einfach, insbesondere ohne Werkzeug, und schnell wieder voneinander und von dem Klebeband getrennt werden. Somit können im Allgemeinen die Kabel vor Ort schnell installiert werden.

Der dem freien Endbereich gegenüberliegende zweite bzw. zweite freie Endbereich des ersten Kabels kann mit einer Trommel oder mit weiteren aufgewickelten Kabeln auf einer Trommel verbunden sein.

Gemäß einem zweiten Aspekt der Erfindung wird eine Kabelanordnung vorgeschlagen, umfassend - einen freien Endbereich eines ersten Kabels, - einen ersten Endbereich eines zweiten Kabels, wobei das zweite Kabel parallel zu dem ersten Kabel ausgerichtet ist, - ein Klebeband, mittels dem der freie Endbereich des ersten Kabels beabstandet zu dem ersten Endbereich des zweiten Kabels mit dem ersten Endbereich des zweiten Kabels lösbar verbunden ist, wobei das Klebeband an seinem ersten Klebebandende und seinem dem ersten Klebebandende gegenüberliegendem zweiten Klebebandende in einer Längsrichtung des Klebebands zur Bildung von Öffnungslaschen derart gefaltet ist, dass eine haftend beschichtete Seite des Klebebands lösbar teilweise lösbar mit sich verklebt ist.

Vorteilhaft hieran ist, dass die Kabelanordnung im Allgemeinen technisch einfach und kostengünstig herstellbar ist. Zudem lassen sich aufgrund der Öffnungslaschen die Endbereiche der Kabel bzw. die Kabel typischerweise schnell und technisch einfach, insbesondere ohne Werkzeug, voneinander und von dem Klebeband trennen. Folglich können im Regelfall die Kabel vor Ort schnell installiert werden.

Gemäß einem dritten Aspekt der Erfindung wird eine Kabelverbindungsvorrichtung zum Verbinden eines ersten Kabels mit einem zweiten Kabel mittels eines Klebebands vorgeschlagen, wobei die Kabelverbindungsvorrichtung folgendes aufweist: - eine Kabelhalterung zum Halten eines freien Endbereichs des ersten Kabels beabstandet und parallel zu einem ersten Endbereich des zweiten Kabels, - einen Klebebandapplizierer zum Zuführen des Klebebands zu einem Klebebandapplizierkopf, wobei das Klebeband zur Bildung von Öffnungslaschen an seinem ersten Klebebandende und seinem zweiten dem ersten Klebebandende gegenüberliegendem Klebebandende in einer Längsrichtung des Klebebands derart gefaltet ist, dass eine haftend beschichtete Seite des Klebebands teilweise mit sich verklebt ist, und - den Klebebandapplizierkopf zum Umschlingen zumindest eines Teils des freien Endbereichs des ersten Kabels und zumindest eines Teils des ersten Endbereichs des zweiten Kabels mit dem Klebeband und zum Bilden mindestens eines Kontaktbereichs, der zwischen dem freien Endbereich des ersten Kabels und dem ersten Endbereich des zweiten Kabels angeordnet ist und in dem eine haftend beschichtete Seite des Klebebands mit sich verklebt ist.

Ein Vorteil hiervon im Allgemeinen ist, dass mittels der Kabelverbindungsvorrichtung die Kabel technisch einfach und kostengünstig lösbar miteinander verbunden werden können. Somit kann typischerweise mittels der Kabelverbindungsvorrichtung technisch einfach und kostengünstig eine Kabelkette mit mehreren Kabeln gebildet werden, bei der jeweils ein Kabelende bzw. ein Endbereich eines Kabels mit dem Kabelende bzw. dem Endbereich des nächsten Kabels kettenförmig verbunden ist. Da das Verbindungselement, d.h. das Klebeband, kostengünstig ist, muss das Verbindungselement im Normalfall nicht wiederverwendet werden. Dies senkt typischerweise die Kosten. Darüber hinaus müssen bei der Kabelverbindungsvorrichtung im Allgemeinen die Kabel nicht mit einer hohen Präzision zueinander ausgerichtet werden, damit die Endbereiche der Kabel mittels des Klebebands verbunden werden können. Aufgrund der durch die Kabelverbindungsvorrichtung erzeugten Öffnungslaschen können die Kabel üblicherweise technisch einfach, insbesondere ohne Werkzeug, und schnell wieder voneinander und von dem Klebeband getrennt werden. Somit können die Kabel typischerweise vor Ort schnell installiert werden.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform des Verfahrens wird das Klebeband mit seiner haftend beschichteten Seite in zumindest zwei Bereichen zum Bilden von zwei Kontaktbereichen, insbesondere in drei Bereichen zum Bilden von drei Kontaktbereichen, gegeneinander gedrückt, wobei ein erster Kontaktbereich der Kontaktbereiche zwischen dem freien Endbereich des ersten Kabels und dem ersten Endbereich des zweiten Kabels gebildet wird und ein weiterer Kontaktbereich der Kontaktbereiche auf einer dem ersten Klebebandende und dem zweiten Klebebandende des Klebebands zugewandten Seite des ersten Endbereichs des zweiten Kabels gebildet wird. Vorteilhaft hieran ist, dass die Kabel üblicherweise sicher miteinander verbunden werden. Dies erhöht typischerweise die Zuverlässigkeit, dass die Kabel bei einem Transport miteinander verbunden bleiben. Insbesondere bleibt hierdurch die Verbindung zwischen den beiden Kabeln auch dann im Regelfall sicher bestehen, wenn an einem Kabel entlang seiner Längsrichtung gezogen wird. Dies gilt üblicherweise besonders, wenn die Durchmesser der Kabel unterschiedlich groß sind. Somit kann typischerweise eine besonders zuverlässige Kabelkette hergestellt werden. Durch die separate Umschlingung der beiden Kabel, d.h. zwischen den Kabeln befindet sich (mindestens) ein Kontaktbereich, in dem das Klebeband mit sich verklebt ist, kann in der Regel ein Klebeband mit geringer Haltekraft verwendet werden. Dies verringert üblicherweise die Gefahr der Bildung bzw. des Verbleibens von Rückständen auf den Kabeln beim Lösen des Klebebands von einem Kabel oder beiden Kabeln. Darüber hinaus lässt sich hierdurch im Allgemeinen die Verbindung der Kabel besonders leicht lösen.

Gemäß einer Ausführungsform des Verfahrens werden ein erster Kontaktbereich und ein zweiter Kontaktbereich der drei Kontaktbereiche zwischen dem freien Endbereich des ersten Kabels und dem ersten Endbereich des zweiten Kabels gebildet werden, wobei sich der erste Kontaktbereich näher an dem freien Endbereich des ersten Kabels befindet als der zweite Kontaktbereich, und ein dritter Kontaktbereich der drei Kontaktbereiche auf einer dem ersten Klebebandende und dem zweiten Klebebandende des Klebebands zugewandten Seite des ersten Endbereichs des zweiten Kabels gebildet. Dies erhöht im Allgemeinen die Zuverlässigkeit und die mechanische Belastbarkeit der Verbindung zwischen dem ersten Kabel und dem zweiten Kabel noch weiter. Zudem wird hierdurch typischerweise die Position bzw. der Abstand des zweiten Kabels relativ zu dem ersten Kabel technisch einfach festgelegt.

Gemäß einer Ausführungsform des Verfahrens wird ein Klebebandapplizierkopf bei dem Gegeneinanderdrücken des Klebebands - in dem ersten Kontaktbereich in Richtung des ersten Kabels bewegt und/oder - in dem zweiten Kontaktbereich in Richtung des zweiten Kabels bewegt und/oder - in dem dritten Kontaktbereich in Richtung des zweiten Kabels bewegt. Hierdurch wird im Normallfall ein Freibereich bzw. werden Freibereiche, in dem bzw. denen die mit einer klebenden Schicht versehene Seite des Klebebands nicht mit sich verklebt ist, verringert. Hierdurch ist typischerweise das Klebeband über eine besonders große Fläche mit sich verklebt. Somit werden im Allgemeinen die beiden Kabel besonders sicher an ihrer jeweiligen Position und miteinander verbunden durch das Klebeband gehalten.

Gemäß einer Ausführungsform des Verfahrens wird zuerst der erste Kontaktbereich gebildet, insbesondere werden die Kontaktbereiche in folgender Reihenfolge gebildet: zuerst der erste Kontaktbereich, anschließend der zweite Kontaktbereich und schließlich der dritte Kontaktbereich. Hierdurch kann das Verfahren üblicherweise noch schneller durchgeführt werden, da die Gesamtlänge der Bewegungs- bzw. Fahrwege besonders kurz ist. Zudem wird der Abstand des zweiten Kabels vom ersten Kabel in der Regel besonders sicher festgelegt.

Gemäß einer Ausführungsform des Verfahrens wird zuerst der erste Kontaktbereich gebildet, insbesondere werden die Kontaktbereiche in folgender Reihenfolge gebildet: zuerst der erste Kontaktbereich, anschließend der dritte Kontaktbereich und schließlich der zweite Kontaktbereich. Ein Vorteil hiervon ist, dass typischerweise die Position des zweiten Kabels relativ zu dem ersten Kabel sicher festgelegt wird. Zudem wird im Normalfall ein Herausdrücken des zweiten Kabels aus dem Klebebandschiffchen durch diese Reihenfolge sicher verhindert.

Gemäß einer Ausführungsform des Verfahrens wird ein dem ersten Endbereich des zweiten Kabels gegenüberliegender zweiter Endbereich des zweiten Kabels mittels Klebebands mit einem ersten Endbereich eines dritten Kabels zum Bilden einer Kabelkette verbunden. Hierdurch wird üblicherweise technisch einfach und kostengünstig eine Kabelkette mit mindestens drei Kabeln gebildet.

Gemäß einer Ausführungsform des Verfahrens ist bei dem Umschließen eines Teils des freien Endbereichs des ersten Kabels und eines Teils des ersten Endbereichs des zweiten Kabels mit dem Klebeband das erste Kabel zu dem zweiten Kabel entlang einer Längsrichtung des ersten Kabels, insbesondere um mindestens ca. 50% einer Länge des ersten Kabels in Längsrichtung, versetzt angeordnet. Hierdurch kann in der Regel technisch einfach eine Kette bzw. Serie von miteinander verbundenen Kabeln gebildet werden, die auf einer Trommel oder ähnlichem aufgerollt werden kann. Die Längsrichtung kann insbesondere die Richtung sein, in die das Kabel die größte Ausdehnung hat.

Gemäß einer Ausführungsform der Kabelanordnung ist die haftend beschichtete Seite des Klebebands zwischen dem freien Endbereich des ersten Kabels und dem ersten Endbereich des zweiten Kabels teilweise mit sich verklebt. Hierdurch ist in der Regel eine besonders sichere Verbindung zwischen Kabeln vorhanden. Dies gilt üblicherweise besonders, wenn die Durchmesser der Kabel unterschiedlich groß sind. Somit kann typischerweise eine besonders zuverlässige Kabelkette hergestellt werden. Durch die separate Umschlingung der beiden Kabel, d.h. zwischen den Kabeln befindet sich (mindestens) ein Kontaktbereich, in dem das Klebeband mit sich verklebt ist, kann in der Regel ein Klebeband mit geringer Haltekraft bei der Kabelanordnung verwendet werden. Dies verringert üblicherweise die Gefahr der Bildung bzw. des Verbleibens von Rückständen auf den Kabeln beim Lösen des Klebebands von einem Kabel oder beiden Kabeln. Darüber hinaus lässt sich hierdurch im Allgemeinen die Verbindung der Kabel bei der Kabelanordnung besonders leicht lösen.

Gemäß einer Ausführungsform der Kabelanordnung ist das erste Kabel zu dem zweiten Kabel entlang einer Längsrichtung des ersten Kabels, insbesondere um mindestens ca. 50% einer Länge des ersten Kabels in Längsrichtung, versetzt angeordnet. Die Serie bzw. Kette von Kabeln der Kabelanordnung kann üblicherweise technisch einfach auf eine Trommel aufgerollt werden und vor Ort bzw. bei Bedarf wieder abgerollt werden. Dies erleichtert in der Regel den Transport bzw. die Logistik. Die Längsrichtung kann insbesondere die Richtung sein, in die das Kabel die größte Ausdehnung hat.

Gemäß einer Ausführungsform der Kabelverbindungsvorrichtung weist der Klebebandapplizierer zwei Parallelgreiferbacken zum Zusammendrücken des Klebebands in den Kontaktbereichen auf. Ein Vorteil hiervon ist, dass im Allgemeinen die Kontaktbereiche, in denen die haftend beschichtete Seite des Klebebands mit sich verklebt wird, technisch einfach und zuverlässig herstellbar sind.

Gemäß einer Ausführungsform der Kabelverbindungsvorrichtung ist der Klebebandapplizierer in Längsrichtung des Klebebands verfahrbar ausgebildet. Hierdurch kann typischerweise das Klebeband technisch besonders einfach zusammen mit dem Klebebandapplizierer zu den Kabeln bewegt werden. Somit ist die Kabelverbindungsvorrichtung im Normalfall technisch noch einfacher ausgebildet.

Gemäß einer Ausführungsform der Kabelverbindungsvorrichtung umfasst der Klebebandapplizierer eine Ansaugeinrichtung zum Ansaugen des ersten Klebebandendes und/oder des zweiten Klebebandendes. Hierdurch wird typischerweise sichergestellt, dass das Klebebandende oder die Klebebandenden an dem Klebebandapplizierer angeordnet bleiben, bis das Klebeband sicher mit den Kabeln verbunden wurde bzw. verklebt wurde. Dies erhöht im Regelfall die Zuverlässigkeit des Verbindungsvorgangs der beiden Kabel.

Gemäß einer Ausführungsform der Kabelverbindungsvorrichtung weisen die Parallelgreiferbacken jeweils eine reibungserhöhende Beschichtung, insbesondere eine reibungserhöhende Elastomerschicht, auf. Ein Vorteil hiervon ist, dass ein Abrutschen der Klebebandenden vom Klebebandapplizierer typischerweise sicher verhindert wird. Dies erhöht üblicherweise die Zuverlässigkeit des Verbindungsvorgangs der beiden Kabel. Darüber hinaus werden hierdurch typischerweise Ungenauigkeiten bei der Positionierung der beiden Kabel besser ausgeglichen. Zudem lässt sich im Allgemeinen das Klebeband etwas in Position ziehen, sollte es am oberen Kabeln schon anhaften bevor der erste Kontaktbereich bearbeitet wurde.

Gemäß einer Ausführungsform der Kabelverbindungsvorrichtung weisen die Parallelgreiferbacken jeweils eine reibungsvermindernde Schicht, insbesondere eine Polytetrafluorethylen-Schicht, auf. Vorteilhaft hieran ist, dass die Parallelgreiferbacken typischerweise besser über das Klebeband gleiten, wodurch das Klebeband besonders gut an die Kabel angedrückt wird.

Gemäß einer Ausführungsform umfasst die Kabelverbindungsvorrichtung ferner einen Faltgreifer zum Greifen eines Klebebandendes und Falten des Klebebandendes entlang einer Längsachse des Klebebands zum Herstellen einer Öffnungslasche. Hierdurch kann im Normalfall technisch einfach das Klebebandende zu einer Öffnungslasche gefaltet werden.

Gemäß einer Ausführungsform umfasst die Kabelverbindungsvorrichtung ferner einen Schneidgreifer zum Halten des Klebebands und zum Durchschneiden des Klebebands. Hierdurch kann üblicherweise das Klebeband technisch einfach transportiert und abgeschnitten werden.

Gemäß einer Ausführungsform ist die Kabelverbindungsvorrichtung derart ausgebildet, dass das erste Kabel und das zweite Kabel bei dem Umschlingen zumindest eines Teils des freien Endbereichs des ersten Kabels und zumindest eines Teils des ersten Endbereichs des zweiten Kabels mit dem Klebeband derart gehalten werden, dass das erste Kabel zu dem zweiten Kabel entlang einer Längsrichtung des ersten Kabels, insbesondere um mindestens ca. 50% einer Länge des ersten Kabels in Längsrichtung, versetzt angeordnet ist. Hierdurch kann in der Regel technisch einfach eine Kette bzw. Serie von miteinander verbundenen Kabeln gebildet werden, die auf einer Trommel oder ähnlichem aufgerollt werden kann. Die Längsrichtung kann insbesondere die Richtung sein, in die das Kabel die größte Ausdehnung hat.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1a zeigt: eine perspektivische Ansicht einer Kabelanordnung gemäß einer ersten Ausführungsform der vorliegenden Erfindung;
- Fig. 1b zeigt: eine perspektivische Ansicht einer Kabelanordnung gemäß einer zweiten Ausführungsform der vorliegenden Erfindung;
- Fig. 2 zeigt: eine perspektivische Ansicht einer Ausführungsform eines Klebebandschiffchens, das in dem erfindungsgemäßen Verfahren verwendet werden kann;
- Fig. 3 zeigt: eine perspektivische Ansicht einer Kabelverbindungsvorrichtung gemäß einer Ausführungsform der vorliegenden Erfindung;
- Fig. 4a-4f zeigen: Seitenansichten der Kabelverbindungsvorrichtung aus Fig. 3 während des Ablaufs eines Verfahrens zum Verbinden eines ersten Kabels mit einem zweiten Kabel gemäß einer Ausführungsform der vorliegenden Erfindung;
- Fig. 5 zeigt: eine Seitenansicht der Kabelanordnung aus Fig. 2;
- Fig. 6 zeigt: eine weitere Seitenansicht der Kabelanordnung aus Fig. 2 bzw. Fig. 5; und
- Fig. 7 zeigt: eine Detailansicht einer Klebebandauflage des Klebebandapplizierkopfs der Kabelverbindungsvorrichtung aus Fig. 3 bzw. aus den Fig. 4a-4f.

Die Figuren sind lediglich schematisch und nicht maßstabsgetreu. Gleiche Bezugszeichen bezeichnen in den verschiedenen Figuren gleiche oder gleichwirkende Merkmale

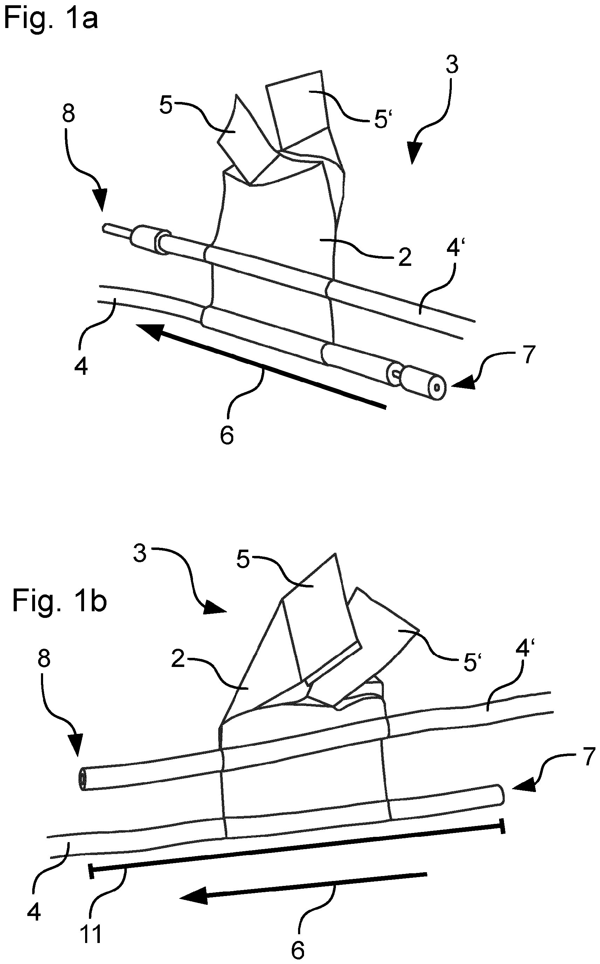

Fig. 1a zeigt eine perspektivische Ansicht einer Kabelanordnung 3 gemäß einer ersten Ausführungsform der vorliegenden Erfindung. Fig. 1b zeigt eine perspektivische Ansicht einer Kabelanordnung 3 gemäß einer zweiten Ausführungsform der vorliegenden Erfindung. Die in Fig. 1a gezeigte Ausführungsform der Kabelanordnung 3 unterscheidet sich von der in Fig. 1b gezeigten Ausführungsform der Kabelanordnung 3 lediglich dadurch, dass die Endbereiche 4, 4' der beiden Kabel unterschiedlich ausgebildet sind, während in Fig. 1b die Endbereiche 4, 4' der Kabel gleich ausgebildet sind. In Fig. 1a weisen die Endbereiche 4, 4' eine gecrimpte Aderendhülse bzw. einen abisolierten Bereich mit Teilabzug auf. In Fig. 1b sind die Endbereiche 4, 4' bzw. die Kabelenden einfach abgelängt worden. Im Folgenden werden die Fig. 1a und 1b gemeinsam erläutert bzw. die folgenden Erläuterungen betreffen jeweils Fig. 1a und Fig. 1b, wenn nicht anderes angegeben.

Die Kabelanordnung 3 umfasst ein erstes Kabel (in Fig. 1a und in Fig. 1b unten) und ein zweites Kabel (in Fig. 1a und in Fig. 1b oben). Das erste Kabel weist einen freien Endbereich 4 auf, das mit einem ersten Endbereich 4' des zweiten Kabels verbunden ist, wobei das zweite Ende bzw. der zweite dem freien Endbereich 4 gegenüberliegende Endbereich des ersten Kabels mit der Trommel oder mit weiteren aufgewickelten Kabeln auf der Trommel verbunden sein kann. Das erste Kabel ist wenigstens für die Länge des Überlappungsbereichs 11 parallel zu dem zweiten Kabel angeordnet. Der freie Endbereich 4 des ersten Kabels sowie der erste Endbereich 4' des zweiten Kabels bzw. die beiden Enden 7, 8 der Kabel zeigen in zueinander entgegengesetzte Richtungen. Der freie Endbereich 4 des ersten Kabels und der erste Endbereich 4' des zweiten Kabels sind (senkrecht zu ihrer Längserstreckung, die in Fig. 1a und in Fig. 1b jeweils entlang der Verkettungsrichtung verläuft) beabstandet zueinander angeordnet. Die beiden Kabel sind voneinander beabstandet und überdecken sich in dieser Position (in Fig. 1a bzw. Fig. 1b von oben betrachtet) nur für die Länge des Überlappungsbereichs 11.

Die beiden Kabel können Teil einer Kabelkette von mehreren Kabeln (z.B. zehn, fünfzig oder hundert) sein bzw. werden, bei der jeweils zwei Kabel mit ihren Endbereichen 4, 4' parallel miteinander verbunden sind. Auf diese Weise wird eine Kabelkette gebildet, die z.B. auf eine Trommel aufgewickelt werden kann. Die Kabel können entsprechend einer Verschaltung, z.B. eines Schaltschranks, miteinander verbunden sein.

Die Kabelkette kann beispielsweise bei dezentralisierten Produktionen zum Einsatz kommen. Hierbei werden vollständige oder Teil von Kabelsätzen gefertigt, miteinander verkettet und auf einer Trommel aufgewickelt. Die konfektionierten Kabelketten werden an die Montageorte geliefert, wo sie verbaut werden. Die Kabelketten werden normalerweise so erstellt, dass beim Abwickeln der einzelnen Kabel eine logische, dem Verdrahtungsplan entsprechende Abfolge vorhanden ist. Der Montagemitarbeiter muss sich bei der Verwendung solcher Kabelketten vor Ort zur Installation der Kabel nicht um die Anordnung der einzelnen Kabel bemühen, da ihm die Reihenfolge der Kabel durch die Abfolge der Kabel auf der Trommel bzw. in der Kabelkette bereits vorgegeben ist. Die beiden Kabel sind lösbar miteinander mittels eines Klebebands 2 verbunden. Das Klebeband 2 weist an einem ersten Klebebandende und an einem dem ersten Klebebandende (entlang der Längsrichtung des Klebebands) gegenüberliegenden zweiten Klebebandende Öffnungslaschen 5, 5' auf. Die Öffnungslaschen 5, 5' werden gebildet, indem das Klebeband 2, das (zumindest, insbesondere genau) auf einer Seite mit einer klebenden Schicht bzw. eine Adhäsionsschicht versehen ist, an den beiden Klebebandenden miteinander verklebt ist. Hierbei wird die klebende Seite des ersten Klebebandendes in sich verklebt und die klebende Seite des zweiten Klebebandendes wird ebenfalls in sich verklebt. Die Öffnungslaschen 5, 5' werden dazu verwendet, das Klebeband 2 von den Kabeln zu lösen und so die Verbindung zwischen den beiden Kabeln zu lösen.

Das erste Kabel weist einen größeren Abstand zu den Klebebandenden auf als das zweite Kabel. Die beiden Klebebandenden befinden sich auf einer Seite des zweiten Kabels bzw. des ersten Endbereichs 4' des zweiten Kabels, die dem ersten Kabel bzw. dem freien Endbereich 4 des ersten Kabels abgewandt ist. Das erste Klebebandende ist mit sich verklebt und nicht mit dem zweiten Klebebandende verklebt. Das zweite Klebebandende ist mit sich verklebt und nicht mit dem ersten Klebebandende verklebt.

Das Klebeband 2 umgibt das erste Kabel fast vollständig. Das erste Kabel befindet sich ungefähr in der Mitte der Längsausdehnung des Klebebands 2, wobei die Längsausdehnung des Klebebands 2 in Fig. 1a bzw. 1b im Wesentlichen von oben nach unten und anschließend wieder nach oben verläuft.

Die Verkettungsrichtung 6 wird in Fig. 1a bzw. Fig. 1b durch einen Pfeil angedeutet. Dies bedeutet, dass die miteinander verbundenen Kabel in diese Richtung weiter transportiert werden. Der zweite Endbereich des ersten Kabels, der in Längsrichtung des ersten Kabels dem freien Endbereich des ersten Kabels gegenüberliegt, ist mit einer Trommel oder mit weiteren aufgewickelten Kabeln auf der Trommel verbunden (nicht gezeigt). Der zweite Endbereich des zweiten Kabels, der dem ersten Endbereich 4' des zweiten Kabels gegenüberliegt, und in den Zeichnungen nicht gezeigt ist, ist noch nicht mit einem weiteren Kabel verbunden. An dieser Stelle kann dann ein weiteres Kabel mit dem zweiten Kabel verbunden werden und auf diese Weise die Kabelkette weiter gebildet werden, welche in Verkettungsrichtung 6 gezogen und z.B. auf einer Trommel aufgewickelt wird.

Das Klebeband 2 umschlingt bzw. umschließt einen Teilbereich des freien Endbereichs 4 des ersten Kabels und einen ersten Endbereich 4' des zweiten Kabels. Das Klebeband 2 bzw. der vom Klebeband 2 umschlossene Teilbereich des freien Endbereichs 4 des ersten Kabels und ein erster Endbereich 4' des zweiten Kabels sind jeweils zu dem Ende 7, 8 des Kabels beabstandet. Vorstellbar ist jedoch auch, dass das Klebeband 2 derart an den Kabeln angebracht wird bzw. umgekehrt, dass das Klebeband 2 nicht beabstandet zu dem jeweiligen Ende 7, 8 des Kabels angeordnet ist.

Das Klebeband 2 wird bzw. ist derart zusammengeklebt, dass die Kanten des Klebebands 2 bis auf den Bereich der Öffnungslaschen 5, 5' im Wesentlichen parallel bzw. bündig zueinander verlaufen. Der eine Teil des Klebebands 2 (z.B. der vordere Bereich des Klebebands 2) steht (außerhalb der Öffnungslaschen 5, 5') nicht seitlich über den anderen Teil des Klebebands 2 (z.B. der hintere Bereich des Klebebands 2) hinaus. Dies gilt genauso umgekehrt.

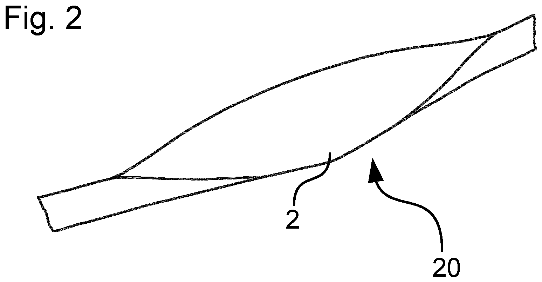

Fig. 2 zeigt eine perspektivische Ansicht einer Ausführungsform eines Klebebandschiffchens 20, das in dem erfindungsgemäßen Verfahren verwendet werden kann. Das Klebebandschiffchen 20 wird aus dem zunächst flachen Klebeband 2 gebildet, indem die klebende Seite des ersten Klebebandendes in sich verklebt wird und die klebende Seite des zweiten Klebebandendes in sich verklebt wird. In der Mitte des Klebebands 2 verläuft das Klebeband 2 flacher als an den Klebebandenden, die im Wesentlichen senkrecht zu der Mitte des Klebebands 2 verlaufen.

Das erste (linke) Klebebandende in Fig. 2 und das zweite (rechte) Klebebandende in Fig. 2 bilden die (späteren) Öffnungslaschen 5, 5' der Kabelanordnung 3.

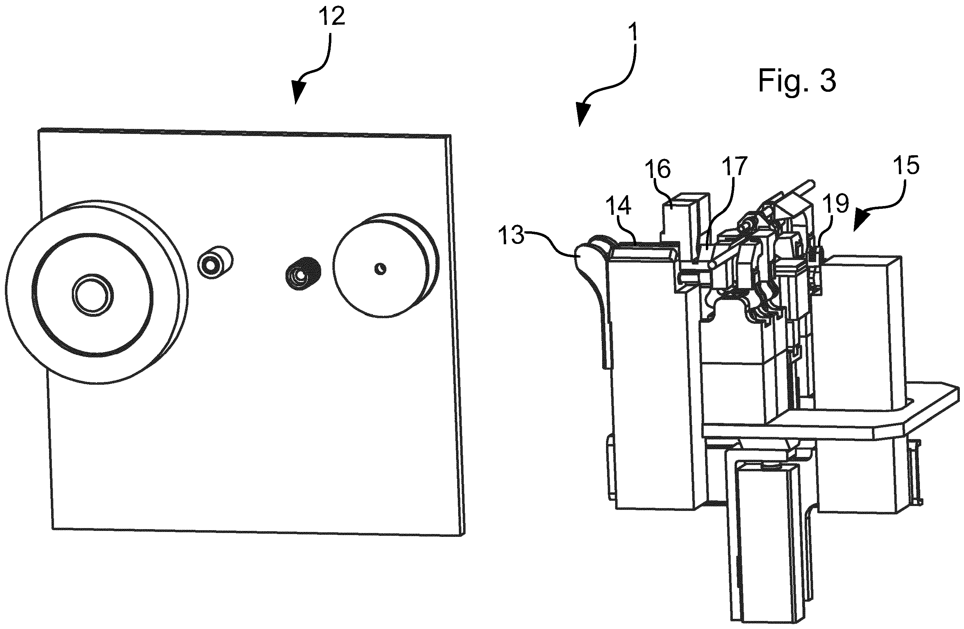

Fig. 3 zeigt eine perspektivische Ansicht einer Kabelverbindungsvorrichtung 1 gemäß einer Ausführungsform der vorliegenden Erfindung. Die Kabelverbindungsvorrichtung 1 weist eine Zuführungseinrichtung 12 und einen Klebebandapplizierer 15 auf. Die Zuführungseinrichtung 12 weist mehrere Rollen auf, über die ein Klebebandstreifen von einer Klebebandvorratsrolle dem Klebebandapplizierer 15 zugeführt wird.

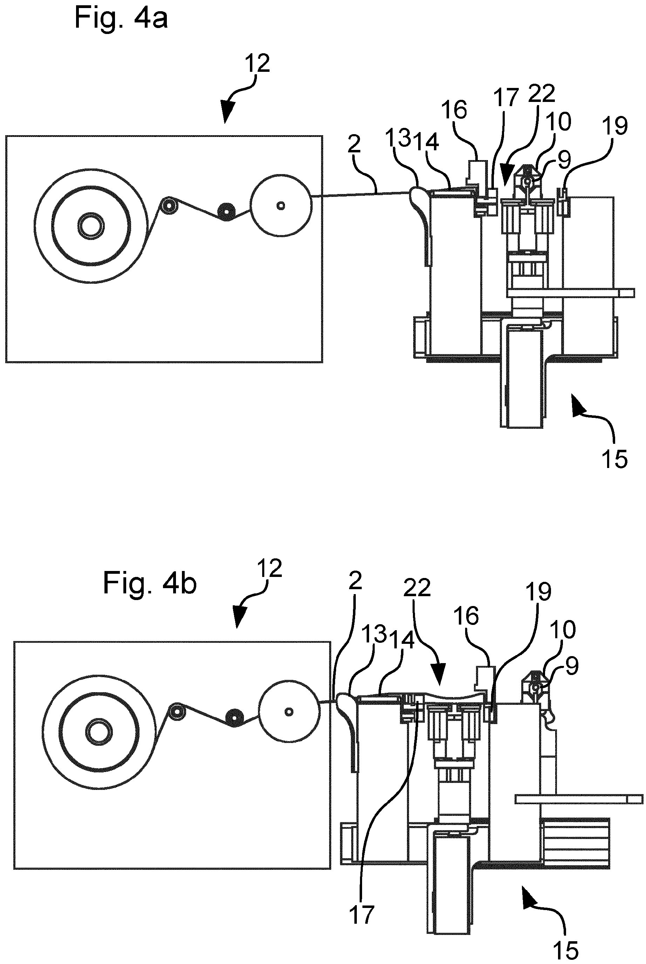

Fig. 4a-4f zeigen Seitenansichten der Kabelverbindungsvorrichtung 1 aus Fig. 3 während des Ablaufs eines Verfahrens zum Verbinden eines ersten Kabels mit einem zweiten Kabel gemäß einer Ausführungsform der vorliegenden Erfindung. Der Klebebandapplizierer 15 ist linear von links nach rechts bzw. umgekehrt relativ zu der Zuführungseinrichtung 12 und relativ zu den Doppelkabelgreifern 9, 10, die die Kabel greifen und halten, bewegbar.

In Fig. 4a ist das Klebeband 2 von der Zuführungseinrichtung 12 bereits dem Klebebandapplizierer 15 zugeführt. Der Klebebandapplizierer 15 umfasst eine Bahnführung 13, in die das Klebeband 2 von der Zuführungseinrichtung 12 geführt wird. Durch die Bahnführung 13 gelangt das Klebeband 2 in die Führungsrinne 14, in der das Klebeband 2 bzw. der Klebebandstreifen geführt wird.

Weiter rechts von der Führungsrinne 14 in Fig. 4a befindet sich der Schneidgreifer 16 zum Schneiden des Klebebandstreifens in ein einzelnes Klebeband 2, resp. in ein einzelnes Klebebandschiffchen 20. Weiter rechts von dem Schneidgreifer 16 in Fig. 4a ist der Faltgreifer 17 angeordnet. Der Faltgreifer 17 faltet das Klebeband 2 bzw. den Klebebandstreifen entlang der Längsrichtung des Klebebands 2 bzw. des Klebebandstreifens (die in Fig. 4a-4f von links nach rechts verläuft) derart, dass die mit einer Klebeschicht beschichtete Seite des Klebebands 2 teilweise in sich verklebt wird.

Weiter rechts vom Faltgreifer 17 ist der Klebebandapplizierkopf 22 angeordnet. Dieser ist vertikal, d.h. von unten nach oben bzw. umgekehrt linear bewegbar. Mittels des Klebebandapplizierkopfs 22 wird das Klebeband 2 an den beiden Kabeln befestigt.

Zudem umfasst die Kabelverbindungsvorrichtung 1 eine Kabelhalterung, in Form eines oberen Doppelkabelgreifers 10 und eines unteren Doppelkabelgreifers 9. Die Doppelkabelgreifer 9, 10 greifen jeweils den freien Endbereich 4 des ersten Kabels bzw. den ersten Endbereich 4' des zweiten Kabels. Die Doppelkabelgreifer 9, 10 halten den freien Endbereich 4 des ersten Kabels beabstandet zum ersten Endbereich 4' des zweiten Kabels. Der untere Doppelkabelgreifer 9 umfasst zwei Greifer zum Greifen und Halten des ersten Kabels. Der obere Doppelkabelgreifer 10 umfasst zwei Greifer zum Greifen und Halten des zweiten Kabels.

Ein Haltegreifer 19 ist Teil des Klebebandapplizierer 15. Der Klebebandapplizier 15 bewegt sich nach rechts und links in den Fig. 4a-4f. Der Klebebandapplizierkopf 22 bewegt sich in Fig. 4a-4f von unten nach oben (hoch und runter). Der Haltegreifer 19 hält ein erstes Klebebandende des Klebebands 2. Der Schneidgreifer 16 ist stationär gegenüber den Doppelkabelgreifern 9, 10 angeordnet.

Das Klebeband 2 wird bereitgehalten, wobei das Klebeband 2 an einem ersten Klebebandende entlang der Längsrichtung des Klebebands 2 zur Erzeugung der ersten Öffnungslasche 5, 5' gefaltet ist. Der ortsfeste Schneidgreifer 16 hält das an seinem ersten Klebebandende gefaltete Klebeband 2 bereit. Die Führungsrinne 14 sorgt dafür, dass das Klebeband 2 U-förmig für den Faltgreifer 17 vorbereitet wird.

Der Klebebandapplizierer 15 fährt dem Klebebandstreifen entgegen bzw. in Richtung der Zuführungseinrichtung 12 in die Aufnahmeposition. Die Aufnahmeposition ist in Fig. 4b gezeigt. Hierbei werden die Bahnführung 13 und die Führungsrinne 14 entlang des Klebebandstreifens geschoben. Der Haltegreifer 19 übernimmt die vorgeformte Öffnungslasche 5, 5' des Klebebands 2 vom Schneidgreifer 16. Der Faltgreifer 17 faltet das Klebeband 2 auf einer Länge, die doppelt so groß wie die für eine Öffnungslasche 5, 5' des Klebebandschiffchens 20 benötigte Länge des Klebebandendes ist. Die eine Hälfte des gefalteten Teils des Klebebands 2 ist für das zweite Klebebandende des aktuellen Klebebandschiffchens 20 vorgesehen. Die andere Hälfte des gefalteten Teils des Klebebands 2 ist für das erste Klebebandende des nächsten Klebebandschiffchens 20 vorgesehen.

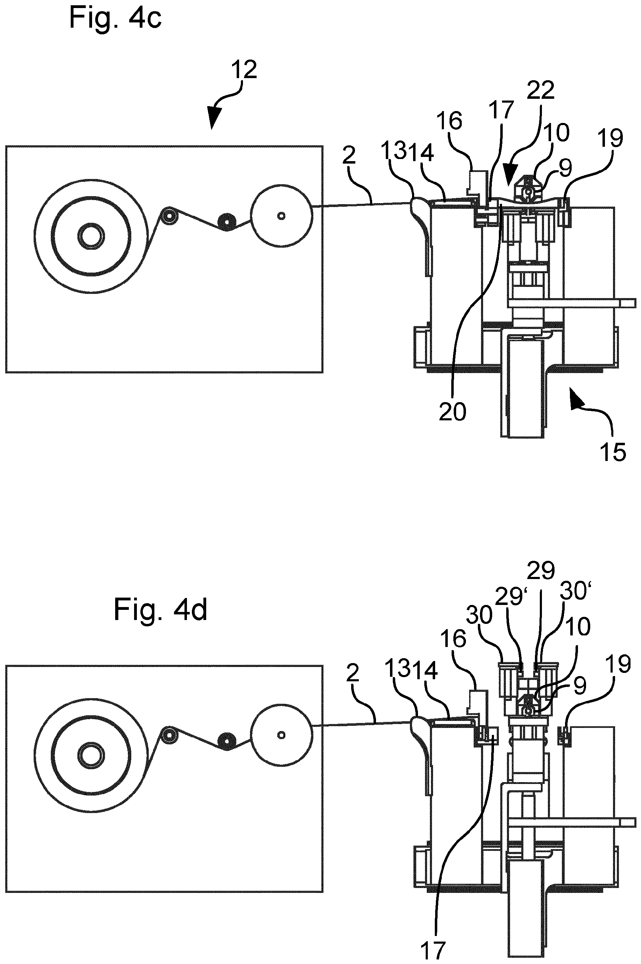

Der Klebebandapplizierer 15 bewegt sich mit dem festgehaltenen ersten Klebebandende in die Applizierposition 21. Die Applizierposition 21 ist in Fig. 4c gezeigt. Während der Bewegung wird der Klebebandstreifen von der Klebebandrolle abgerollt. Wenn sich der Klebebandapplizierer 15 in der Applizierposition 21 befindet, trennt der Schneidgreifer 16 das an seinen beiden Klebebandenden gefaltete Klebeband 2 in der Mitte der Faltung an dem zweiten Klebebandende, wodurch das Klebebandschiffchen 20 bzw. das Klebeband 2 von dem übrigen Klebebandstreifen getrennt wird. Der Schneidgreifer 16 hält das zweite Klebebandende fest. Der Schneidgreifer 16, der Haltegreifer 19 und der Faltgreifer 17 sind derart ausgebildet, dass sie das Klebeband 2 übernehmen können, d.h. der Haltegreifer 19 kann das Klebeband 2 bzw. das erste Klebebandende vom Schneidgreifer 16 übernehmen und der Schneidgreifer 16 kann das zweite Klebebandende vom Faltgreifer 17 übernehmen. Hierzu besitzen der Schneidgreifer 16, der Haltegreifer 19 und der Faltgreifer 17 jeweils Aussparungen in ihren Greiferbacken.

In der Applizierposition 21 werden der Faltgreifer 17 und der Haltegreifer 19 entlastet. Dann dienen sie als Führung des Klebebandschiffchens 20. Der Klebebandapplizierkopf 22 bewegt sich daraufhin hoch zum ersten Kabel (dem unteren Kabel).

Das auf dem Klebebandapplizierkopf 22 befindliche Klebebandschiffchen 20 wird dabei ungefähr oder genau in seiner Mitte durch das erste Kabel flachgedrückt und (nach oben) eingeschlagen. Der Klebebandapplizierkopf 22 fährt an den ersten (untersten) Hauptpunkt 23, der sich unmittelbar oberhalb des ersten Kabels befindet. Hier drücken die Parallelgreiferbacken 29, 29' das in seiner Mitte der Längserstreckung gefaltete Klebebandschiffchen 20 zusammen und fahren in geschlossener Position, in der das Klebeband 2 zusammengedrückt wird, nach unten in Richtung des ersten Kabels. Die gefahrene Strecke von dem ersten Hauptpunkt 23 kann ca. 0,5 mm betragen. Hierdurch wird ein Freibereich 26, 26', 26", der unmittelbar an das jeweilige Kabel angrenzt und in dem das Klebeband 2 nicht mit sich verklebt ist, verringert. Es wird somit sichergestellt, dass das Klebeband 2 ausreichend Kontakt mit dem Umfang des unteren Kabels besitzt und Positionsungenauigkeiten aufgehoben werden, die einen großen Freibereich 26 zur Folge hätten. Durch die Parallelgreiferbacken 29, 29' wird das Klebeband 2 in einem ersten Kontaktbereich 28 zusammengedrückt.

Die Parallelgreiferbacken 29, 29' werden nach dem Bewegen in Richtung des ersten Kabels in geschlossenen Positionen, um das Klebeband 2 im ersten Kontaktbereich 28 zusammenzudrücken, nun geöffnet, so dass der Klebebandapplizierkopf 22 den mittleren, zweiten Hauptpunkt 24 anfahren kann bzw. anfährt. Der zweite Hauptunkt 24 liegt unmittelbar unterhalb des unteren Endes des Umfangs des zweiten Kabels. Nach dem Bewegen der Parallelgreiferbacken 29, 29' zu dem zweiten Hauptunkt 24 werden diese geschlossen und dadurch das Klebeband 2 in einem zweiten Kontaktbereich 28', der mit dem ersten Kontaktbereich 28 überlappt, zusammengedrückt. Die Parallelgreiferbacken 29, 29' fahren in geschlossener Position, in der das Klebeband 2 zusammengedrückt wird, nach oben in Richtung des zweiten Kabels. Die gefahrene Strecke von dem zweiten Hauptpunkt 24 kann ca. 0,5 mm betragen. Die Parallelgreiferbacken 29, 29' werden wiederum geöffnet, so dass der Klebebandapplizierkopf 22 den oberen, dritten Hauptpunkt 25 anfahren kann bzw. anfährt.

Der obere Hauptpunkt 25 befindet sich unmittelbar oberhalb des zweiten Kabels. In der vorgegebenen Position werden die Parallelgreiferbacken 29, 29' erneut geschlossen und das Klebeband 2 in dem dritten Kontaktbereich 28" zusammengedrückt und miteinander bzw. mit sich verklebt. Anschließend werden die Parallelgreiferbacken 29, 29' im geschlossenen Zustand nach unten in Richtung des zweiten Kabels geführt. Die Strecke kann hier ca. 0,5 mm betragen. Die Position nach Beendigung dieses Bewegungsablaufs mit geöffneten Parallelgreiferbacken 29, 29' ist in Fig. 4d gezeigt.

Der erste Hauptunkt 23 und der dritte Hauptunkt 25 werden jeweils mit der Unterkante der Parallelgreiferbacken 29, 29' angefahren. Dagegen wird der zweite Hauptunkt 24, der sich unmittelbar unterhalb des zweiten Kabels befindet, mit der Oberkante der Parallelgreiferbacken 29, 29' angefahren.

Die Parallelgreiferbacken 29, 29' sind in ihrer Größe so gewählt, dass der Bereich zwischen dem ersten Kabel (unteres Kabel in Fig. 4a-4f) und dem zweiten Kabel (oberes Kabel in Fig.4a-4f) fest zusammengerückt werden kann, insbesondere da der erste Kontaktbereich 28 und der zweite Kontaktbereich 28' sich überlagern.

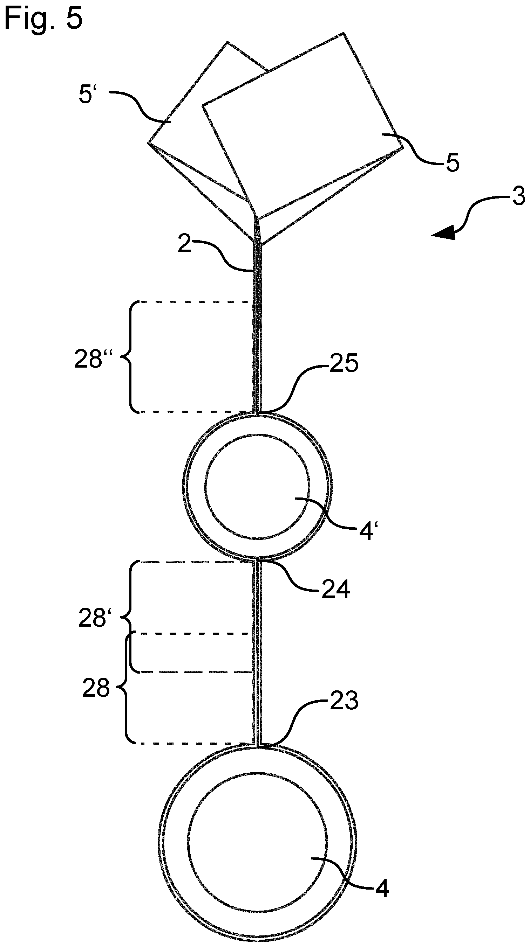

Die Höhe (in Fig. 5 von oben nach unten verlaufend bzw. umgekehrt) der beiden ersten Kontaktbereiche 28, 28' zwischen den beiden Kabelns zusammen ist größer als die Höhe des dritten Kontaktbereichs 28" oberhalb des zweiten Kabels. Die drei Kontaktbereiche 28, 28', 28" können jeweils die gleiche Höhe aufweisen.

Eine alternative Ausführungsform sieht vor, dass der Bewegungsablauf sich insofern ändert, als dass nach dem ersten Hauptpunkt 23 zunächst der dritte Hauptpunkt 25 und zum Schluss der zweite Hauptpunkt 24 angefahren werden. Die Parallelgreiferbacken 29, 29' werden nach dem Bewegen in Richtung des ersten Kabels in geschlossenen Positionen, um das Klebeband 2 im ersten Kontaktbereich 28 zusammenzudrücken, nun geöffnet, so dass der Klebebandapplizierkopf 22 den oberen, dritten Hauptpunkt 25 anfahren kann bzw. anfährt. Der obere Hauptpunkt 25 befindet sich unmittelbar oberhalb des zweiten Kabels. Nun werden die Parallelgreiferbacken 29, 29' erneut geschlossen und das Klebeband 2 in dem dritten Kontaktbereich 28" zusammengedrückt und mit sich verklebt. Das Klebeband 2 bzw. das Klebebandschiffchen 20 wird so in einem dritten Kontaktbereich 28" fixiert. In der geschlossenen Position der Parallelgreiferbacken 29, 29' fahren diese eine Strecke (z.B. ca. 0,5 mm) nach unten in Richtung des zweiten Kabels.

Nun wird der zweite Hauptpunkt 24 angefahren. Nach dem Bewegen der Parallelgreiferbacken 29, 29' zu dem zweiten Hauptunkt 24 werden diese geschlossen und dadurch das Klebeband 2 in einem zweiten Kontaktbereich 28' zusammengedrückt. Anschließend werden die Parallelgreiferbacken 29, 29' im geschlossenen Zustand nach oben in Richtung des zweiten Kabels geführt. Die Strecke kann hier ca. 0,5 mm betragen.

Dadurch dass die Parallelgreiferbacken 29, 29' zunächst zu dem dritten Hauptpunkt 25 bewegt werden, bevor diese an den zweiten Hauptpunkt 24 bewegt werden, wird der Kontakt zwischen dem Klebebandschiffchen 20 und dem zweiten Kabel früher im Prozess sichergestellt, was für prozesskritische Kabel von Vorteil ist.

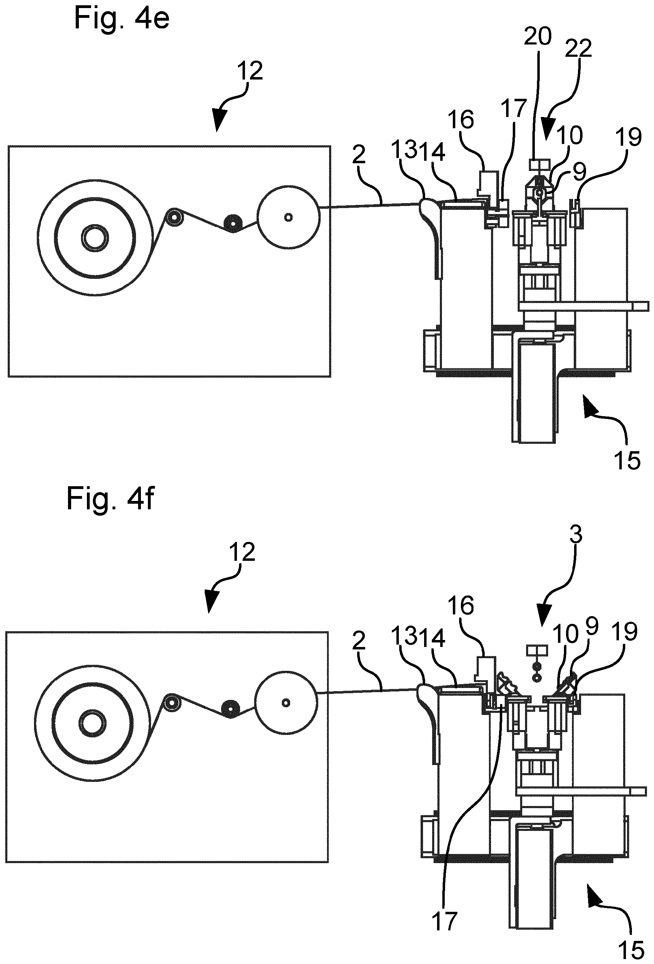

Nach dem Verkleben des Klebebands 2 in den drei Kontaktbereichen 28, 28', 28" fährt der Klebebandapplizierkopf 22 wieder nach unten. Die Position nach diesem Herunterfahren ist in Fig. 4e gezeigt. Die Doppelkabelgreifer 9, 10 halten die beiden ersten Endbereiche 4, 4' der Kabel weiterhin fest. Schließlich öffnen sich die Doppelkabelgreifer 9, 10 und geben die fertige Kabelanordnung 3 frei. Dies ist in Fig. 4f gezeigt.

Die Kabelanordnung 3 umfasst das erste Kabel und das zweite Kabel. Ein freier Endbereich des ersten Kabels ist mit einem ersten Endbereich des zweiten Kabels verbunden. Die Kabel sind parallel und zueinander entlang ihrer Längsrichtung (die in Richtung der Verkettungsrichtung 6 verläuft) versetzt ausgerichtet. Weitere Kabel können mit dem zweiten Endbereich des zweiten Kabels verbunden werden, so dass eine Kabelkette entsteht. Die Kabelkette kann auf einer Trommel aufgerollt werden.

Die Kabel überlappen sich in einem Überlappungsbereich 11 entlang der Längsrichtung der Kabel bzw. der Verkettungsrichtung 6, z.B. ca. 100 mm. Die Kabel sind zueinander entlang einer Längsrichtung des ersten Kabels bzw. des zweiten Kabels versetzt zueinander angeordnet. Der Überlappungsbereich 11 beträgt maximal ca. 30%, insbesondere maximal ca. 20%, der Länge des ersten Kabels oder des zweiten Kabels. Üblicherweise sind die Längen des ersten Kabels und des zweiten Kabels gleich groß. Der Überlappungsbereich 11 beträgt mindestens ca. 5% oder mindestens ca. 8%, insbesondere maximal 10%, vorzugsweise maximal 15%, der Länge des ersten Kabels oder des zweiten Kabels. Der Überlappungsbereich 11 kann in einem Bereich von ca. 5%-30%, insbesondere ca. 10% bis ca. 20%, vorzugsweise in einem Bereich von ca. 15% bis ca. 20%, der Länge des ersten Kabels oder des zweiten Kabels liegen. Die mehreren Kabel werden in Serie bzw. treppenartig miteinander verbunden.

Der zweite Endbereich des zweiten Kabels kann nun in einem neuen Schritt der Kabelverbindung die Funktion des freien Endbereichs des ersten Kabels übernehmen.

Die Führungsrinne 14 besitzt eine Führungskerbe. Die Führungskerbe ermöglicht ein benutzerfreundliches Einfädeln des Klebebandstreifens in die Kabelverbindungsvorrichtung 1. Dabei wird der Klebebandstreifen von der Klebebandrolle der Zuführungseinrichtung 12 abgezogen und das erste Klebebandende von Hand zu einer Öffnungslasche 5, 5' entlang der Längsrichtung des Klebebands 2 gefaltet. Diese Öffnungslasche 5, 5' wird in der Führungskerbe der Führungsrinne 14 überstehend positioniert. Der Faltgreifer 17 kann so das Klebeband 2 aufnehmen. Der Klebebandapplizierer 15 fährt dann von der Aufnahmeposition in die Applizierposition 21. Hier wird die händisch geformte Öffnungslasche 5, 5' vom Schneidgreifer 16 erfasst. Die Kabelverbindungsvorrichtung 1 ist so betriebsbereit eingerichtet.

Die Parallelgreiferbacken 29, 29' können zur Reibungserhöhung eine Elastomerschicht aufweisen, die Lamellen quer zur Bewegungsrichtung entlang des Klebebands 2 aufweisen kann.

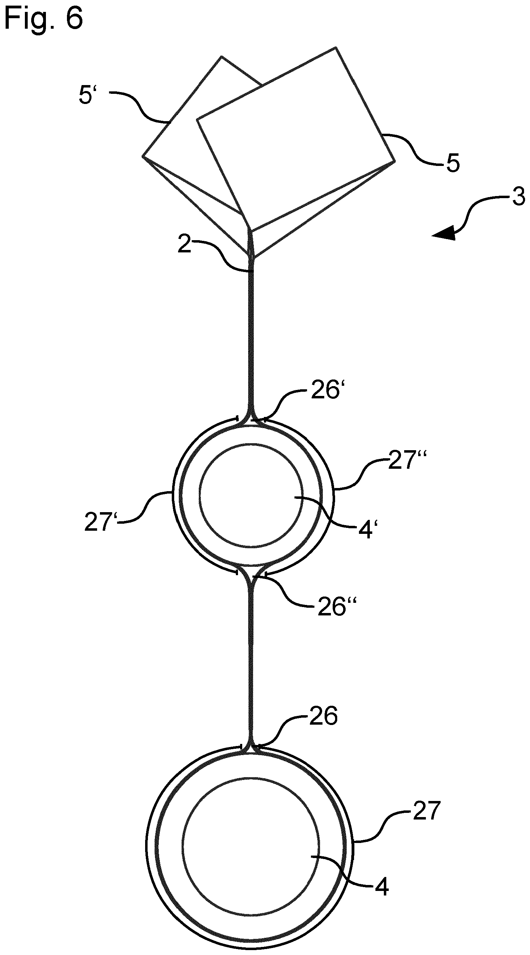

Fig. 5 zeigt eine Seitenansicht der Kabelanordnung 3 aus Fig. 2. Fig. 6 zeigt eine weitere Seitenansicht der Kabelanordnung 3 aus Fig. 2 bzw. Fig. 5. In Fig. 5 sind die drei Kontaktbereiche 28, 28', 28", in denen die Parallelgreiferbacken 29, 29' das Klebeband 2 zusammendrücken zu sehen. Das Klebeband 2 ist im Wesentlichen symmetrisch (bis auf die Öffnungslaschen 5, 5') bezüglich einer Symmetrieebene angeordnet, die in Fig. 5 bzw. Fig. 6 von oben nach unten durch die Mitte der Kabel verläuft. Die Kabelanordnung 3 kann weitere Kabel (nicht gezeigt) umfassen. Die Kabel, z.B. zehn, zwanzig oder mehr Kabel, sind in Serie angeordnet und weisen jeweils einen Überlappungsbereich zueinander auf (die möglichen Größen des Überlappungsbereichs sind im viertvorangegangenen Absatz angegeben). Die Überlappungsbereiche der Vielzahl von Kabeln können jeweils gleich groß sein. Die Kabel sind miteinander jeweils paarweise verbunden. D.h. jedes Kabel ist mit genau zwei Kabeln verbunden (mit Ausnahme des ersten und des letzten Kabels in der Serie, die jeweils nur mit genau einem Kabel verbunden sind).

In Fig. 6 sind die drei Umschlingungsbereiche 27, 27', 27" zu sehen, d.h. die Bereiche, in denen ein Kontakt zwischen dem jeweiligen Kabel und dem Klebeband 2 besteht. In dem ersten Umschlingungsbereich 27 verläuft ein ununterbrochener Teil des Klebebands 2 fast vollständig um den Umfang des freien Endbereichs 4 des ersten Kabels. Das Klebeband macht hier fast einen Vollkreis. Unmittelbar oberhalb des ersten Kabels befindet sich ein Freibereich 26, in dem das Klebeband 2 weder zusammengeklebt ist noch mit dem ersten Kabel verklebt ist.

Im zweiten Umschlingungsbereich 27' und dem dritten Umschlingungsbereich 27" umläuft jeweils ein ununterbrochener Teil des Klebebands 2 fast die Hälfte des Umfangs des ersten Endbereichs 4' des zweiten Kabels. Das Klebeband 2 verläuft im zweiten Umschlingungsbereich 27' über fast 180° des Umfangs des ersten Endbereichs 4' des zweiten Kabels. Das Klebeband 2 verläuft im dritten Umschlingungsbereich 27" über fast 180° des Umfangs des ersten Endbereichs 4' des zweiten Kabels.

Unmittelbar oberhalb und unterhalb des zweiten Kabels ist jeweils ein weiterer Freibereich 26', 26" angeordnet. Auch hier ist das Klebeband 2 weder zusammengeklebt, noch ist das Klebeband 2 an das Kabel geklebt.

Insbesondere bei Kabeln mit kleinen Durchmesser ist die Kabelanordnung 3 bzw. Verbindung der beiden Kabel besonders stabil, wenn die Freibereiche 26, 26', 26" möglichst klein sind. Das Klebeband kann in dem Bereich zwischen den beiden Kabeln bzw. den beiden Endbereichen 4, 4' im Wesentlichen vollständig mit sich verklebt sein, d.h. dass im Wesentlichen keine Freibereiche 26, 26' existieren.

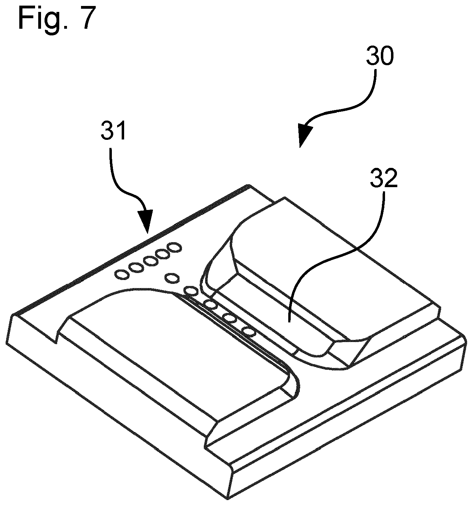

Fig. 7 zeigt eine Detailansicht einer Klebebandauflage 30 des Klebebandapplizierkopfs 22 der Kabelverbindungsvorrichtung 1 aus Fig. 3 bzw. aus den Fig. 4a-4f. Die Klebebandauflage 30 weist eine Unterdruckeinrichtung 31 zum Ansaugen des Klebebands 2 auf. Dadurch kann das Klebeband 2 besonders sicher am Klebebandapplizierkopf 22 gehalten werden. Das Klebeband 2 befindet sich während des Befestigens in der Haltekontur 32, die prismenförmig ausgebildet ist.

Die Festigkeit der Verbindung des ersten Kabels und des zweiten Kabels bzw. der jeweiligen Endbereiche 4, 4' der Kabel ergibt sich aus der Festigkeit und der Adhäsionskraft des Klebebands 2 sowie aus den Umschlingungsbereichen 27, 27' der beiden Kabel. Der Freibereich 26, 26', 26" ist der dreiecks- bzw. prismenförmige Bereich zwischen dem Außenmantel des jeweiligen Kabels und der mit sich verklebten Seite des Klebebands 2 bzw. den Kontaktbereichen 28, 28', 28".

Das Klebeband 2 bzw. die klebende Schicht auf einer Seite des Klebebands 2 besitzt eine derartige Adhäsionskraft, dass die Klebeverbindung zwischen der klebenden Seite des Klebebands 2 in den Kontaktbereichen 28, 28', 28" durch menschliche Kraft ohne weiteres gelöst werden kann. Durch Auseinanderziehen der Öffnungslaschen 5, 5' kann die Klebeverbindung in den Kontaktbereichen 28, 28', 28" manuell, insbesondere ohne Werkzeug, gelöst werden. Insbesondere verbleiben keine Rückstände an den Kabeln nach dem Lösen des Klebebands 2 von den Kabeln. Gleichzeitig ist die Adhäsionskraft so groß, dass ein unbeabsichtigtes Lösen der Klebeverbindung in den Kontaktbereichen 28, 28', 28" normalerweise nicht auftritt. Das Klebeband 2 kann z.B. ein handelsübliches Malerklebeband sein, insbesondere ein handelsübliches beständiges Malerklebeband.

Das Klebeband 2 bzw. die Verklebung des Klebebands 2 in den Kontaktbereichen 28, 28', 28" kann durch Auseinanderziehen der Öffnungslaschen 5, 5' gelöst werden und schließlich können auch die Kabel von dem Klebeband 2, insbesondere rückstandsfrei, gelöst werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Verbinden eines ersten Kabels mit einem zweiten Kabel mit einem Klebeband (2), umfassend folgende Schritte:
- Anordnen eines freien Endbereichs (4) des ersten Kabels, das insbesondere ein Kabel am Ende einer Kabelkette von mehreren miteinander verbundenen Kabeln ist, parallel und beabstandet zu einem ersten Endbereich (4') des zweiten Kabels;
- Bereitstellen des Klebebands (2), wobei das Klebeband (2) zur Bildung von Öffnungslaschen (5, 5') an seinem ersten Klebebandende und seinem zweiten dem ersten Klebebandende gegenüberliegendem Klebebandende in einer Längsrichtung des Klebebands (2) derart gefaltet ist, dass eine haftend beschichtete Seite des Klebebands (2) teilweise mit sich verklebt ist; und
- Umschließen eines Teils des freien Endbereichs (4) des ersten Kabels und eines Teils des ersten Endbereichs (4') des zweiten Kabels mit dem Klebeband (2) derart, dass der freie Endbereich (4) des ersten Kabels
-- einen größeren Abstand zu dem ersten Klebebandende und dem zweiten Klebebandende als der erste Endbereich (4') des zweiten Kabels aufweist und
-- lösbar mit dem ersten Endbereich (4') des zweiten Kabels verbunden ist.

2. Verfahren nach Anspruch 1, wobei
das Klebeband (2) mit seiner haftend beschichteten Seite in zumindest zwei Bereichen zum Bilden von zwei Kontaktbereichen (28, 28', 28"), insbesondere in drei Bereichen zum Bilden von drei Kontaktbereichen (28, 28', 28"), gegeneinander gedrückt wird,
wobei ein erster Kontaktbereich (28) der Kontaktbereiche (28, 28', 28") zwischen dem freien Endbereich (4) des ersten Kabels und dem ersten Endbereich (4') des zweiten Kabels gebildet wird und ein weiterer Kontaktbereich (28") der Kontaktbereiche (28, 28', 28") auf einer dem ersten Klebebandende und dem zweiten Klebebandende des Klebebands (2) zugewandten Seite des ersten Endbereichs (4') des zweiten Kabels gebildet wird.

3. Verfahren nach Anspruch 2, wobei
ein erster Kontaktbereich (28) und ein zweiter Kontaktbereich (28') der drei Kontaktbereiche (28, 28', 28") zwischen dem freien Endbereich (4) des ersten Kabels und dem ersten Endbereich (4') des zweiten Kabels gebildet werden, wobei sich der erste Kontaktbereich (28) näher an dem freien Endbereich (4) des ersten Kabels befindet als der zweite Kontaktbereich (28'),
und
ein dritter Kontaktbereich (28") der drei Kontaktbereiche (28, 28', 28") auf einer dem ersten Klebebandende und dem zweiten Klebebandende des Klebebands (2) zugewandten Seite des ersten Endbereichs (4') des zweiten Kabels gebildet werden.

4. Verfahren nach einem Anspruch 2 oder 3, wobei
ein Klebebandapplizierkopf (22) bei dem Gegeneinanderdrücken des Klebebands (2)
- in dem ersten Kontaktbereich (28) in Richtung des ersten Kabels bewegt wird und/oder
- in dem zweiten Kontaktbereich (28') in Richtung des zweiten Kabels bewegt wird und/oder
- in dem dritten Kontaktbereich (28") in Richtung des zweiten Kabels bewegt wird.

5. Verfahren nach Anspruch 3 oder 4, wobei
zuerst der erste Kontaktbereich (28) gebildet wird,
insbesondere die Kontaktbereiche (28, 28', 28") in folgender Reihenfolge gebildet werden: zuerst der erste Kontaktbereich (28), anschließend der zweite Kontaktbereich (28') und schließlich der dritte Kontaktbereich (28").

6. Verfahren nach Anspruch 3 oder 4, wobei
zuerst der erste Kontaktbereich (28) gebildet wird,
insbesondere die Kontaktbereiche (28, 28', 28") in folgender Reihenfolge gebildet werden: zuerst der erste Kontaktbereich (28), anschließend der dritte Kontaktbereich (28") und schließlich der zweite Kontaktbereich (28').

7. Verfahren nach einem der vorhergehenden Ansprüche, wobei
ein dem ersten Endbereich (4') des zweiten Kabels gegenüberliegender zweiter Endbereich des zweiten Kabels mittels Klebebands (2) mit einem ersten Endbereich eines dritten Kabels zum Bilden einer Kabelkette verbunden wird.

8. Verfahren nach einem der vorhergehenden Ansprüche, wobei
bei dem Umschließen eines Teils des freien Endbereichs (4) des ersten Kabels und eines Teils des ersten Endbereichs (4') des zweiten Kabels mit dem Klebeband (2) das erste Kabel zu dem zweiten Kabel entlang einer Längsrichtung des ersten Kabels, insbesondere um mindestens ca. 50% einer Länge des ersten Kabels in Längsrichtung, versetzt angeordnet ist.

9. Kabelanordnung (3) umfassend
- einen freien Endbereich (4) eines ersten Kabels,
- einen ersten Endbereich (4') eines zweiten Kabels, wobei das zweite Kabel parallel zu dem ersten Kabel ausgerichtet ist,
- ein Klebeband (2), mittels dem der freie Endbereich (4) des ersten Kabels beabstandet zu dem ersten Endbereich (4') des zweiten Kabels mit dem ersten Endbereich (4') des zweiten Kabels lösbar verbunden ist,
wobei das Klebeband (2) an seinem ersten Klebebandende und seinem dem ersten Klebebandende gegenüberliegendem zweiten Klebebandende in einer Längsrichtung des Klebebands (2) zur Bildung von Öffnungslaschen (5, 5') derart gefaltet ist, dass eine haftend beschichtete Seite des Klebebands (2) lösbar teilweise mit sich verklebt ist.

10. Kabelanordnung (3) nach Anspruch 9, wobei
die haftend beschichtete Seite des Klebebands (2) zwischen dem freien Endbereich (4) des ersten Kabels und dem ersten Endbereich (4') des zweiten Kabels teilweise mit sich verklebt ist.

11. Kabelanordnung (3) nach Anspruch 9 oder 10, wobei
das erste Kabel zu dem zweiten Kabel entlang einer Längsrichtung des ersten Kabels, insbesondere um mindestens ca. 50% einer Länge des ersten Kabels in Längsrichtung, versetzt angeordnet ist.

12. Kabelverbindungsvorrichtung (1) zum Verbinden eines ersten Kabels mit einem zweiten Kabel mittels eines Klebebands (2), wobei die Kabelverbindungsvorrichtung (1) folgendes aufweist:
- eine Kabelhalterung zum Halten eines freien Endbereichs (4) des ersten Kabels beabstandet und parallel zu einem ersten Endbereich (4') des zweiten Kabels,
- einen Klebebandapplizierer (15) zum Zuführen des Klebebands (2) zu einem Klebebandapplizierkopf (22), wobei das Klebeband (2) zur Bildung von Öffnungslaschen (5, 5') an seinem ersten Klebebandende und seinem zweiten dem ersten Klebebandende gegenüberliegendem Klebebandende in einer Längsrichtung des Klebebands (2) derart gefaltet ist, dass eine haftend beschichtete Seite des Klebebands (2) teilweise mit sich verklebt ist, und
- den Klebebandapplizierkopf (22) zum Umschlingen zumindest eines Teils des freien Endbereichs (4) des ersten Kabels und zumindest eines Teils des ersten Endbereichs (4') des zweiten Kabels mit dem Klebeband (2) und zum Bilden mindestens eines Kontaktbereichs (28, 28'), der zwischen dem freien Endbereich (4) des ersten Kabels und dem ersten Endbereich (4') des zweiten Kabels angeordnet ist und in dem eine haftend beschichtete Seite des Klebebands (2) mit sich verklebt ist.

13. Kabelverbindungsvorrichtung (1) nach Anspruch 12, wobei der Klebebandapplizierer (15) zwei Parallelgreiferbacken (29, 29') zum Zusammendrücken des Klebebands (2) in den Kontaktbereichen (28, 28', 28") aufweist.

14. Kabelverbindungsvorrichtung (1) nach Anspruch 12 oder 13, wobei der Klebebandapplizierer (15) in Längsrichtung des Klebebands (2) verfahrbar ausgebildet ist.

15. Kabelverbindungsvorrichtung (1) nach einem der Ansprüche 12-14, wobei der Klebebandapplizierer (15) eine Ansaugeinrichtung zum Ansaugen des ersten Klebebandendes und/oder des zweiten Klebebandendes umfasst.

16. Kabelverbindungsvorrichtung (1) nach einem der Ansprüche 12-15, wobei die Parallelgreiferbacken (29, 29') jeweils eine reibungserhöhende Beschichtung, insbesondere eine reibungserhöhende Elastomerschicht, aufweist.

17. Kabelverbindungsvorrichtung (1) nach einem der Ansprüche 12-15, wobei die Parallelgreiferbacken (29, 29') jeweils eine reibungsvermindernde Schicht, insbesondere eine Polytetrafluorethylen-Schicht, aufweisen.

18. Kabelverbindungsvorrichtung (1) nach einem der Ansprüche 12-17, ferner umfassend
einen Faltgreifer (17) zum Greifen eines Klebebandendes und Falten des Klebebandendes entlang einer Längsachse des Klebebands (2) zum Herstellen einer Öffnungslasche (5, 5').

19. Kabelverbindungsvorrichtung (1) nach einem der Ansprüche 12-18, ferner umfassend
einen Schneidgreifer (16) zum Halten des Klebebands (2) und zum Durchschneiden des Klebebands (2).

20. Kabelverbindungsvorrichtung (1) nach einem der Ansprüche 12-19, wobei die Kabelverbindungsvorrichtung (1) derart ausgebildet ist, dass das erste Kabel und das zweite Kabel bei dem Umschlingen zumindest eines Teils des freien Endbereichs (4) des ersten Kabels und zumindest eines Teils des ersten Endbereichs (4') des zweiten Kabels mit dem Klebeband (2) derart gehalten werden, dass das erste Kabel zu dem zweiten Kabel entlang einer Längsrichtung des ersten Kabels, insbesondere um mindestens ca. 50% einer Länge des ersten Kabels in Längsrichtung, versetzt angeordnet ist.

## Claims

1. A method for connecting a first cable to a second cable with an adhesive tape (2), comprising the following steps:
- Arranging a free end region (4) of the first cable, in particular a cable at the end of a cable chain of a plurality of cables connected to each other, parallel to and spaced from a first end region (4') of the second cable;
- Providing the adhesive tape (2), wherein the adhesive tape (2) is folded in a longitudinal direction of the adhesive tape (2) to form opening tabs (5, 5') at its first adhesive tape end and its second adhesive tape end opposite the first adhesive tape (2) end such that an adhesively coated side of the adhesive tape (2) partially adheres to itself; and
- Enclosing a part of the free end region (4) of the first cable and a part of the first end region (4') of the second cable with the adhesive tape (2) such that the free end region (4) of the first cable
- has a greater distance from the first adhesive tape end and the second adhesive tape end than the first end region (4') of the second cable and
- is detachably connected to the first end region (4') of the second cable.

2. The method according to claim 1, wherein
the adhesive tape (2) with its adhesively coated side is pressed together in at least two regions for forming two contact regions (28, 28', 28"), in particular in three regions for forming three contact regions (28, 28', 28"),
wherein a first contact region (28) of the contact regions (28, 28', 28") is formed between the free end region (4) of the first cable and the first end region (4') of the second cable and a further contact region (28") of the contact regions (28, 28', 28") is formed on a side of the first end region (4') of the second cable facing the first adhesive tape end and the second adhesive tape end of the adhesive tape (2).

3. The method according to claim 2, wherein
a first contact region (28) and a second contact region (28') of the three contact regions (28, 28', 28") are formed between the free end region (4) of the first cable and the first end region (4') of the second cable, wherein the first contact region (28) is closer to the free end region (4) of the first cable than the second contact region (28'),
and a third contact region (28") of the three contact regions (28, 28', 28") formed on a side of the first end region (4') of the second cable facing the first adhesive tape end and the second adhesive tape end of the adhesive tape (2).

4. The method according to claim 2 or 3, wherein
an adhesive tape applicator head (22) by pressing the adhesive tape (2) together
- is moved in the first contact region (28) in the direction of the first cable and/or
- is moved in the second contact region (28') in the direction of the second cable and/or
- is moved in the third contact region (28") in the direction of the second cable.

5. The method according to claim 3 or 4, wherein
first the first contact region (28) is formed,
in particular the contact regions (28, 28', 28") are formed in the following order: first the first contact region (28), then the second contact region (28') and finally the third contact region (28").

6. The method according to claim 3 or 4, wherein
first the first contact region (28) is formed,
in particular the contact regions (28, 28', 28") are formed in the following order: first the first contact region (28), then the third contact region (28") and finally the second contact region (28').

7. The method according to any one of the preceding claims,
wherein a second end region of the second cable opposite the first end region (4') of the second cable is connected by means of adhesive tape (2) to a first end region of a third cable to form a cable chain.

8. The method according to any one of the preceding claims, wherein
when wrapping a part of the free end region (4) of the first cable and a part of the first end region (4') of the second cable with the adhesive tape (2), the first cable is arranged offset to the second cable along a longitudinal direction of the first cable, in particular by at least about 50% of a length of the first cable in the longitudinal direction.

9. A cable arrangement (3) comprising
- a free end region (4) of a first cable,
- a first end region (4') of a second cable, wherein the second cable is aligned parallel to the first cable,
- an adhesive tape (2), by means of which the free end region (4) of the first cable spaced from the first end region (4') of the second cable is detachably connected to the first end region (4') of the second cable,
wherein the adhesive tape (2) is folded at its first adhesive tape end and its second adhesive tape end opposite the first adhesive tape end in a longitudinal direction of the adhesive tape (2) so as to form opening tabs (5, 5'), such that an adhesively coated side of the adhesive tape (2) partially detachably adheres to itself.

10. The cable arrangement (3) according to claim 9, wherein the adhesively coated side of the adhesive tape (2) partially adheres to itself between the free end region (4) of the first cable and the first end region (4') of the second cable.

11. The cable arrangement (3) according to claim 9 or 10, wherein
the first cable is arranged offset to the second cable along a longitudinal direction of the first cable, in particular by at least about 50% of a length of the first cable in the longitudinal direction.

12. A cable connection device (1) for connecting a first cable to a second cable by means of an adhesive tape (2), wherein the cable connection device (1) has the following:
- a cable holder for holding a free end region (4) of the first cable spaced from and parallel to a first end region (4') of the second cable,
- an adhesive tape applicator (15) for feeding the adhesive tape (2) to an adhesive tape applicator head (22), wherein the adhesive tape (2) is folded to form opening tabs (5, 5') at its first adhesive tape end and its second adhesive tape end opposite the first adhesive tape end in a longitudinal direction of the adhesive tape (2) such that an adhesively coated side of the adhesive tape (2) partially adheres to itself, and
- the adhesive tape applicator (22) for wrapping at least a part of the free end region (4) of the first cable and at least a part of the first end region (4') of the second cable with the adhesive tape (2) and forming at least one contact region (28, 28') which is arranged between the free end region (4) of the first cable and the first end region (4') of the second cable and in which an adhesively coated side of the adhesive tape (2) adheres to itself.

13. The cable connection device (1) according to claim 12, wherein
the adhesive tape applicator (15) has two parallel gripper jaws (29, 29') for compressing the adhesive tape (2) in the contact regions (28, 28', 28").

14. The cable connection device (1) according to claim 12 or 13, wherein
the adhesive tape applicator (15) is configured movable in the longitudinal direction of the adhesive tape (2).

15. The cable connection device (1) according to any one of claims 12-14, wherein the adhesive tape applicator (15) comprises a suction device for sucking the first adhesive tape end and/or the second adhesive tape end.

16. The cable connection device (1) according to one of claims 12-15, wherein the parallel gripper jaws (29, 29') each have a friction- increasing coating, in particular a friction-increasing elastomer layer.

17. The cable connection device (1) according to any one of claims 12-15, wherein the parallel gripper jaws (29, 29') each have a friction-reducing layer, in particular a polytetrafluoroethylene layer.

18. The cable connection device (1) according to any one of claims 12-17, further comprising
a folding gripper (17) for gripping an adhesive tape end and folding the adhesive tape end along a longitudinal axis of the adhesive tape (2) to produce an opening tab (5, 5').

19. The cable connection device (1) according to any one of claims 12-18, further comprising
a cutting gripper (16) for holding the adhesive tape (2) and cutting the adhesive tape (2).

20. The cable connection device (1) according to any one of claims 12-19, wherein the cable connection device (1) is configured such that the first cable and the second cable are held with the adhesive tape (2) in the wrapping of at least a part of the free end region (4) of the first cable and at least a part of the first end region (4') of the second table, such that the first cable is arranged offset to the second cable along a longitudinal direction of the first cable, in particular by at least about 50% of a length of the first cable in the longitudinal direction.

## Revendications

1. Procédé permettant la liaison d'un premier câble à un deuxième câble avec un ruban adhésif (2), comprenant les étapes suivantes :
- disposition d'une zone d'extrémité libre (4) du premier câble, qui est en particulier un câble à l'extrémité d'une chaîne-câble constituée de plusieurs câbles reliés les uns aux autres, parallèlement à et espacée d'une première zone d'extrémité (4') du deuxième câble ;
- fourniture du ruban adhésif (2), le ruban adhésif (2) étant plié au niveau de sa première extrémité de ruban adhésif et de sa seconde extrémité de ruban adhésif opposée à la première extrémité de ruban adhésif, dans une direction longitudinale du ruban adhésif (2), pour former des languettes d'ouverture (5, 5'), de telle sorte qu'une face revêtue d'adhésif du ruban adhésif (2) est partiellement collée sur elle-même ; et
- enveloppement d'une partie de la zone d'extrémité libre (4) du premier câble et d'une partie de la première zone d'extrémité (4') du deuxième câble avec le ruban adhésif (2) de telle sorte que la zone d'extrémité libre (4) du premier câble
-- présente une plus grande distance par rapport à la première extrémité de ruban adhésif et à la seconde extrémité de ruban adhésif que par rapport à la première zone d'extrémité (4') du deuxième câble et
-- est reliée de manière amovible à la première zone d'extrémité (4') du deuxième câble.

2. Procédé selon la revendication 1, dans lequel
le ruban adhésif (2) est pressé contre lui-même avec sa face revêtue d'adhésif en au moins deux zones pour former deux zones de contact (28, 28', 28"), en particulier en trois zones pour former trois zones de contact (28, 28', 28"),
dans lequel une première zone de contact (28) des zones de contact (28, 28', 28") est formée entre la zone d'extrémité libre (4) du premier câble et la première zone d'extrémité (4') du deuxième câble et une zone de contact supplémentaire (28") des zones de contact (28, 28', 28") est formée sur une face de la première zone d'extrémité (4') du deuxième câble faisant face à la première extrémité de ruban adhésif et à la seconde extrémité de ruban adhésif du ruban adhésif (2).

3. Procédé selon la revendication 2, dans lequel
une première zone de contact (28) et une deuxième zone de contact (28') des trois zones de contact (28, 28', 28") sont formées entre la zone d'extrémité libre (4) du premier câble et la première zone d'extrémité (4') du deuxième câble, la première zone de contact (28) étant plus proche de la zone d'extrémité libre (4) du premier câble que la deuxième zone de contact (28'),
et
une troisième zone de contact (28") des trois zones de contact (28, 28', 28") peut être formée sur une face de la première zone d'extrémité (4') du deuxième câble faisant face à la première extrémité de ruban adhésif et à la seconde extrémité de ruban adhésif du ruban adhésif (2).

4. Procédé selon la revendication 2 ou 3, dans lequel
une tête d'applicateur de ruban adhésif (22), lorsque le ruban adhésif (2) est pressé contre lui-même
- est déplacée dans la première zone de contact (28) en direction du premier câble et/ou
- est déplacée dans la deuxième zone de contact (28') en direction du deuxième câble et/ou
- est déplacée dans la troisième zone de contact (28") en direction du deuxième câble.

5. Procédé selon la revendication 3 ou 4, dans lequel
la première zone de contact (28) est d'abord formée,
en particulier les zones de contact (28, 28', 28") sont formées dans l'ordre suivant : d'abord la première zone de contact (28), puis la deuxième zone de contact (28') et enfin la troisième zone de contact (28").

6. Procédé selon la revendication 3 ou 4, dans lequel
la première zone de contact (28) est d'abord formée,
en particulier les zones de contact (28, 28', 28") sont formées dans l'ordre suivant : d'abord la première zone de contact (28), puis la troisième zone de contact (28") et enfin la deuxième zone de contact (28').

7. Procédé selon l'une des revendications précédentes, dans lequel une deuxième zone d'extrémité du deuxième câble opposée à la première zone d'extrémité (4') du deuxième câble est reliée à une première zone d'extrémité d'un troisième câble au moyen d'un ruban adhésif (2) pour former une chaîne-câble.

8. Procédé selon l'une des revendications précédentes, dans lequel en enveloppant une partie de la zone d'extrémité libre (4) du premier câble et une partie de la première zone d'extrémité (4') du deuxième câble avec le ruban adhésif (2), le premier câble est disposé décalé par rapport au deuxième câble le long d'une direction longitudinale du premier câble, en particulier d'au moins environ 50 % d'une longueur du premier câble dans la direction longitudinale.

9. Agencement de câbles (3) comprenant
- une zone d'extrémité libre (4) d'un premier câble,
- une première zone d'extrémité (4') d'un deuxième câble, le deuxième câble étant aligné parallèlement au premier câble,
- un ruban adhésif (2), au moyen duquel la zone d'extrémité libre (4) du premier câble est reliée de manière amovible à la première zone d'extrémité (4') du deuxième câble, espacée de la première zone d'extrémité (4') du deuxième câble,
dans lequel le ruban adhésif (2) est plié au niveau de sa première extrémité de ruban adhésif et de sa deuxième extrémité de ruban adhésif opposée à la première extrémité de ruban adhésif, dans une direction longitudinale du ruban adhésif (2), pour former des languettes d'ouverture (5, 5'), de telle sorte qu'une face revêtue d'adhésif du ruban adhésif (2) est partiellement collée sur elle-même de manière amovible.

10. Agencement de câbles (3) selon la revendication 9, dans lequel la face revêtue d'adhésif du ruban adhésif (2) est partiellement collée sur elle-même entre la zone d'extrémité libre (4) du premier câble et la première zone d'extrémité (4') du deuxième câble.

11. Agencement de câbles (3) selon la revendication 9 ou 10, dans lequel le premier câble est disposé décalé par rapport au deuxième câble le long d'une direction longitudinale du premier câble, en particulier d'au moins environ 50 % d'une longueur du premier câble dans la direction longitudinale.

12. Dispositif de liaison de câbles (1) permettant de relier un premier câble à un deuxième câble au moyen d'un ruban adhésif (2), dans lequel le dispositif de liaison de câbles (1) présente les caractéristiques suivantes :
- un maintien de câble permettant de maintenir une zone d'extrémité libre (4) du premier câble espacée de et parallèle à une première zone d'extrémité (4') du deuxième câble,
- un applicateur de ruban adhésif (15) permettant d'amener le ruban adhésif (2) à une tête d'applicateur de ruban adhésif (22), le ruban adhésif (2) étant plié au niveau de sa première extrémité de ruban adhésif et de sa seconde extrémité de ruban adhésif opposée à la première extrémité de ruban adhésif, dans une direction longitudinale du ruban adhésif (2), pour former des languettes d'ouverture (5, 5'), de telle sorte qu'une face revêtue d'adhésif du ruban adhésif (2) est partiellement collée sur elle-même, et
- la tête d'applicateur de ruban adhésif (22) permettant d'entourer au moins une partie de la zone d'extrémité libre (4) du premier câble et au moins une partie de la première zone d'extrémité (4') du deuxième câble avec le ruban adhésif (2) et permettant de former au moins une zone de contact (28, 28'), laquelle est disposée entre la zone d'extrémité libre (4) du premier câble et la première zone d'extrémité (4') du deuxième câble et dans laquelle une face revêtue d'adhésif du ruban adhésif (2) est collée sur elle-même.

13. Dispositif de liaison de câbles (1) selon la revendication 12, dans lequel l'applicateur de ruban adhésif (15) présente deux mâchoires de préhension parallèles (29, 29') permettant de comprimer conjointement le ruban adhésif (2) dans les zones de contact (28, 28', 28").

14. Dispositif de liaison de câbles (1) selon la revendication 12 ou 13, dans lequel l'applicateur de ruban adhésif (15) est conçu pour être mobile dans la direction longitudinale du ruban adhésif (2).

15. Dispositif de liaison de câbles (1) selon l'une des revendications 12 à 14, dans lequel
l'applicateur de ruban adhésif (15) comprend un système d'aspiration permettant d'aspirer la première extrémité de ruban adhésif et/ou la seconde extrémité de ruban adhésif.

16. Dispositif de liaison de câbles (1) selon l'une des revendications 12 à 15, dans lequel
les mâchoires de préhension parallèles (29, 29') présentent respectivement un revêtement augmentant la friction, en particulier une couche d'élastomère augmentant la friction.

17. Dispositif de liaison de câbles (1) selon l'une des revendications 12 à 15, dans lequel
les mâchoires de préhension parallèles (29, 29') présentent respectivement une couche réduisant la friction, en particulier une couche de polytétrafluoroéthylène.

18. Dispositif de liaison de câbles (1) selon l'une des revendications 12 à 17, comprenant en outre
une pince pliante (17) permettant de saisir une extrémité de ruban adhésif et de plier l'extrémité de ruban adhésif le long d'un axe longitudinal du ruban adhésif (2) afin de réaliser une languette d'ouverture (5, 5').

19. Dispositif de liaison de câbles (1) selon l'une des revendications 12 à 18, comprenant en outre
une pince coupante (16) permettant de maintenir le ruban adhésif (2) et de couper à travers le ruban adhésif (2).

20. Dispositif de liaison de câbles (1) selon l'une des revendications 12 à 19, dans lequel
le dispositif de liaison de câbles (1) est conçu de telle sorte que le premier câble et le deuxième câble, lorsqu'au moins une partie de la zone d'extrémité libre (4) du premier câble et au moins une partie de la première zone d'extrémité (4') du deuxième câble sont entourées avec le ruban adhésif (2), sont maintenus de telle sorte que le premier câble est disposé décalé par rapport au deuxième câble le long d'une direction longitudinale du premier câble, en particulier d'au moins environ 50 % d'une longueur du premier câble dans la direction longitudinale.
